# EUROPEAN PATENT APPLICATION

(11) **EP 4 546 667 A1**
(43) Date of publication of application: **30.04.2025**
(21) Application number: 23830431.5
(22) Date of filing: 29.06.2023
(51) Int. Cl.: H04B 10/2575, H04B 17/309

(54) **OPTICAL NETWORK TOPOLOGY GENERATION METHOD AND SYSTEM, AND DEVICE**

(30) Priority: 29.06.2022 CN 202210757205
(71) Applicant: ZTE Corporation, Shenzhen, Guangdong 518057 (CN)
(72) Inventor: ZHU, Songlin, Shenzhen, Guangdong 518057 (CN); XIE, Yunpeng, Shenzhen, Guangdong 518057 (CN); BEI, Jingsong, Shenzhen, Guangdong 518057 (CN); HE, Zhimin, Shenzhen, Guangdong 518057 (CN)
(74) Representative: Canzler & Bergmeier Patentanwälte Partnerschaft mbB
(86) International application number: PCT/CN2023/104028
(87) International publication number: WO 2024/002267

(57) **Abstract**

The present application relates to the technical field of optical communications, and provides an optical network topology generation method and system, an optical network side device, an electronic device, and a readable storage medium. The method is applied to the optical network side device and comprises: sending optical detection signals of different wavelengths to an optical link in an optical distribution network (ODN), wherein the ODN is communicatively connected to at least one optical network terminal (ONT); obtaining feedback information fed back by means of the optical link, wherein the feedback information is information used for determining the connection relationship among preset optical splitters in the ODN; and generating an optical network topology according to the feedback information.

## Description

### CROSS-REFERENCE TO RELATED APPLICATIONS

This application claims priority from Chinese patent application No. 202210757205.9 filed on June 29, 2022, the entirety of which is incorporated hereby by reference.

### TECHNICAL FIELD

The present application relates to the technical field of optical communications, and particularly relates to an optical network topology generation method and system, and a device.

### BACKGROUND

The passive optical network (PON) is a point-to-multipoint optical communication network. A PON mainly includes: an optical network side based optical line terminal (OLT), a user side based optical network unit (ONU) (or a user side based optical network termination (ONT) based on a user side), and an Optical distribution network (ODN). The ODN is an optical distribution network for splitting/coupling optical signals, or for multiplexing/demultiplexing optical signals, between an OLT and an ONT. The ODN may include a variety of optical passive devices such as optical fibers, splitters, fiber connectors, and wavelength division multiplexers.

Compared with the traditional point-to-point topology structure, the point-to-multipoint optical distribution network structure of the PON can greatly reduce the cost of optical fibers. However, due to the presence of multi-branch structures such as splitters, it is difficult for an operator to automatically acquire a correct optical distribution network topology structure during network deployment. The operator usually needs to manually record a position of the splitter and a connection relationship between the splitter and the ONT into a resource management system for subsequent use. However, since the connection relationship between the splitter and the ONT is dynamically changed, this method is inefficient, and cannot ensure the accuracy of the connection relationship of the devices in the network topology.

### SUMMARY

The present application provides an optical network topology generation method and system, an optical network side device, an electronic device, and a computer readable storage medium.

An embodiment of the present application provides an optical network topology generation method applied to an optical network side device, including: sending optical detection signals of different wavelengths to an optical path in an optical distribution network (ODN), wherein the ODN is communicatively connected to at least one optical network termination (ONT); obtaining feedback information returned via the optical path, wherein the feedback information is information for determining a connection relationship of preset splitters in the ODN; and generating an optical network topology according to the feedback information.

An embodiment of the present application further provides an optical network side device, including: a sending module configured to send optical detection signals of different wavelengths to an optical path in an optical distribution network (ODN), wherein the ODN is communicatively connected to at least one optical network termination (ONT); an obtaining module configured to obtain feedback information returned via the optical path, wherein the feedback information is information for determining a connection relationship of preset splitters in the ODN; and a generation module configured to generate an optical network topology according to the feedback information.

An embodiment of the present application further provides an optical network topology generation system, including: an optical network side device and at least one optical network termination (ONT) connected through an optical distribution network (ODN), wherein an optical path in the ODN include a preset splitter, the optical network side device is configured to perform any one of the optical network topology generation methods according to the embodiments of the present application, and the ONT is configured to receive optical detection signals of different wavelengths sent from the optical network side device through the optical path in the ODN; analyze the optical detection signals to generate feedback information; and send the feedback information to the optical network side device through the ODN so that the optical network side device generates an optical network topology according to the feedback information, wherein the preset splitter is configured to split and transmit a service optical signal and an optical detection signal between the optical network side device and the ONT.

An embodiment of the present application further provides an electronic device, including: one or more processors; and a memory having one or more programs stored thereon which, when executed by the one or more processors, cause the one or more processors to implement any one of the optical network topology generation methods according to the embodiments of the present application.

An embodiment of the present application further provides a computer readable storage medium having a computer program stored thereon which, when executed by a processor, causes any one of the optical network topology generation methods according to the embodiments of the present application to be implemented.

With respect to the above embodiments and other aspects of the present application and implementations thereof, further description is provided in the brief description of drawings, the detailed description of embodiments, and the claims.

### BRIEF DESCRIPTION OF THE DRAWINGS

FIG. 1 shows a block diagram of a passive optical network system according to an embodiment of the present application.
FIG. 2 shows a schematic flowchart of an optical network topology generation method according to an embodiment of the present application.
FIG. 3 shows a block diagram of a passive optical network system according to another embodiment of the present application.
FIG. 4 shows a schematic diagram of a first-stage preset splitter according to an embodiment of the present application.
FIG. 5 shows a schematic diagram of a second-stage preset splitter according to an embodiment of the present application.
FIG. 6 shows a schematic diagram of wavelength planning of optical detection signals when two stages of preset splitters are used in an embodiment of the present application.
FIG. 7 shows a block diagram of an optical network side device according to an embodiment of the present application.
FIG. 8 shows a block diagram of an optical network topology generation system according to an embodiment of the present application.
FIG. 9 shows a block diagram of a passive optical network system according to yet another embodiment of the present application.
FIG. 10 shows a block diagram of a passive optical network system according to yet another embodiment of the present application.
FIG. 11 shows a block diagram of an optical network topology generation system according to another embodiment of the present application.
FIG. 12 shows a schematic flowchart of a working method of an optical network topology generation system according to an embodiment of the present application.
FIG. 13 shows a block diagram of an exemplary hardware architecture of a computing device capable of implementing the optical network topology generation method and apparatus according to an embodiment of the present disclosure.

### DETAILED DESCRIPTION

For clarity and better understanding of the objects, technical solution and advantages of the application, embodiments of the present application will now be described in detail in conjunction with the accompanying drawings. It should be noted that the embodiments of the present application and features therein may be combined with each other in any manner as long as they are not contradictory.

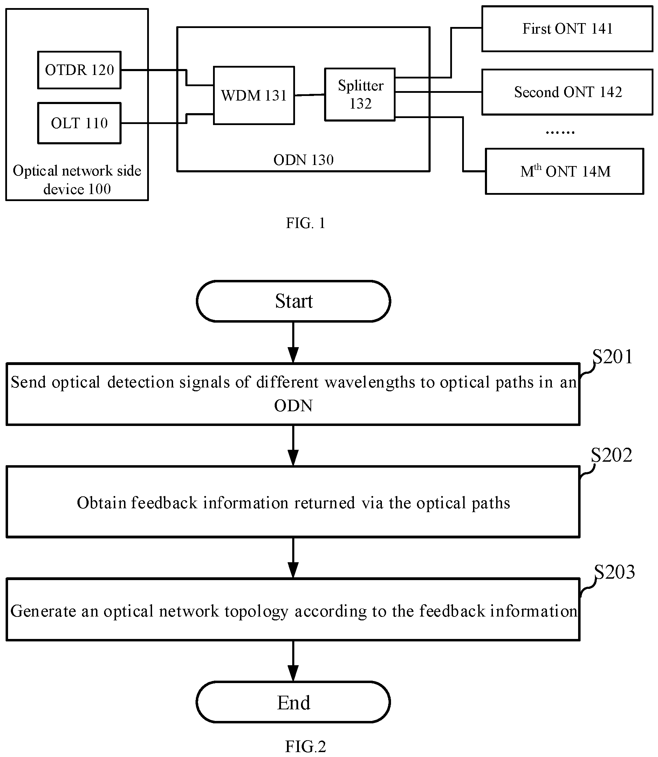

FIG. 1 shows a block diagram of a passive optical network system according to an embodiment of the present application. As shown in FIG. 1, the passive optical network system includes:
an optical network side device 100, an optical distribution network 130, and a plurality of optical network terminations (e.g., a first optical network termination 141, a second optical network termination 142, ..., an M^{th} optical network termination 14M, where M is the number of optical network terminations, and M is an integer greater than or equal to 1).

In some specific implementations, the optical network side device 100 includes: an optical line terminal 110 and an optical time domain reflectometer (OTDR) 120. The optical line terminal 110 is configured to transmit and receive service optical signals, and the OTDR 120 is configured to send optical detection signals of different wavelengths and receive Rayleigh backscatter signals of the optical detection signals (where other backscatter signals such as Raman backscatter signals, Brillouin backscatter signals or the like may also be used).

In some specific implementations, the optical distribution network 130 includes: a wavelength division multiplexer 131, a splitter 132, a backbone fiber (e.g., an optical fiber between the optical line terminal 110 and the splitter 132), and a plurality of distribution fibers (e.g., an optical fiber between the splitter 132 and the first optical network termination 141, or an optical fiber between the splitter 132 and the second optical network termination 142, or the like).

It should be noted that, although only one splitter 132 is shown in FIG. 1, due to the structural characteristics of the optical network, it is common to use a plurality of splitters to implement multi-branch communicative connection of the optical fibers. However, since the connection relationship between the splitters and the ONTs is dynamically changed, topology results of the optical network cannot be automatically tracked and recorded. In the related art, the optical network topology is typically confirmed by manual recording, which, however, is not only inefficient, but also cannot ensure the accuracy of the connection relationship of the devices in the optical network topology.

FIG. 2 shows a schematic flowchart of an optical network topology generation method according to an embodiment of the present application. This optical network topology generation method may be applied to an optical network side device. As shown in FIG. 2, the optical network topology generation method in the embodiment of the present application includes, but is not limited to, the following operations S201 to S203.

At operation S201, sending optical detection signals of different wavelengths to optical path(s) in an optical distribution network (ODN).

The ODN is communicatively connected to at least one optical network termination (ONT).

At operation S202, obtaining feedback information returned via the optical paths.

The feedback information is information for determining a connection relationship of preset splitters in the ODN.

At operation S203, generating an optical network topology according to the feedback information.

In this embodiment, by sending optical detection signals of different wavelengths from the optical network side device to optical paths in an optical distribution network (ODN) connected to the device, optical paths can be detected based on the optical detection signals of different wavelengths, so that different optical paths can be detected and comprehensive detection of the optical paths can be improved; by obtaining feedback information returned via the optical paths, a detection result of each optical path can be determined, and the optical fiber connection condition in the optical path can be well determined through the feedback information, thereby facilitating subsequent processing; and by generating the optical network topology according to the feedback information, the optical network topology does not need to be obtained in a manual recording mode any more, which can not only reduce the labor cost, but also update the connection relationship of the devices in the optical network dynamically in real time, and improve the accuracy of the connection relationship of the devices in the optical network topology.

In some specific implementations, the feedback information is used for determining optical path topology information. The feedback information may include: ONT-connected optical path topology information, and/or, ONT-disconnected optical path topology information. The ONT-connected optical path topology information is an integration of ONT-disconnected optical path topology information and ONT-connected optical path logical topology. The optical network topology refers to a physical layout of various devices interconnected by optical transmission media.

In some specific implementations, generating the optical network topology according to the feedback information may include: generating the optical network topology according to the feedback information of optical detection signals of a whole wavelength set.

It should be noted that the optical path is a path connected between a network port of an optical network side device and a network port of an optical line terminal device through an optical transmission medium. In the present disclosure, optical paths in an optical distribution network (ODN) refer to optical transmission paths through which optical detection signals of different and unique wavelengths pass, that is, definite unique and unbranched transmission paths along which optical detection signals of different wavelengths start from network ports of an optical network side device and pass through a wavelength division multiplexer, a backbone fiber, ports corresponding to respective stages of preset splitters, respective stages of distribution fibers, and network ports of respective ONTs.

In the present disclosure, for example, an optical path in which a preset splitter is not connected to any ONT or is connected to an ONT not in normal operation may be referred to as an ONT-disconnected optical path; and an optical path in which a preset splitter is connected to an ONT in normal operation may be referred to as an ONT-connected optical path. The optical network side device receives and analyzes backscatter signals of the optical detection signals passing through the optical paths to generate pathloss information of the optical paths, which pathloss information can only provide optical path topology information not including the ONT, either for an ONT-disconnected optical path or for an ONT-connected optical path. Therefore, the feedback information provided by the optical network side device is uniformly defined as ONT-disconnected optical path topology information. In an ONT-disconnected optical path, there is no ONT, or the ONT is not operated normally, and therefore, such an optical path cannot provide the optical path logical topology through an ONT in normal operation, and thus can only provide ONT-disconnected optical path topology information. In contrast, in an ONT-connected optical path, the ONT in normal operation can help to provide the optical path logical topology, so that this optical path integrates the ONT-disconnected optical path topology information and the ONT-connected optical path logical topology based on a matching relationship corresponding to the wavelength of the optical detection signal, to generate ONT-connected optical path topology information.

In the present disclosure, the optical path topology information may include a network port of the optical network side device, a wavelength division multiplexer, a backbone fiber, a common port/branch ports of various stages of preset splitters corresponding to each of a plurality of optical detection signals of different and unique wavelengths, a connection relationship between various stages of distribution fibers and network ports of the ONT, and a network location of the optical network side device, a position of each preset splitter, position information of the ONT, and lengths of the backbone fiber and each stage of distribution fiber. In the present disclosure, the optical path topology information corresponding to the optical detection signals of different and unique wavelengths may include: ONT-connected optical path topology information, and/or, ONT-disconnected optical path topology information. The ONT-connected optical path topology information corresponding to the optical detection signals of different and unique wavelengths is integration of ONT-disconnected optical path topology information and ONT-connected optical path logical topology. The whole optical network topology refers to integration of optical detection signal feedback optical path topology information of the whole wavelength set, where the optical path topology information includes ONT-connected optical path topology information, and/or, ONT-disconnected optical path topology information.

By enabling the communicative connection of various devices in the optical network by different types of optical paths, the optical network side device can provide communication services for more optical network terminations, and thus improve the communication efficiency. In addition, under the condition that the connection relationships of the different types of optical paths are definite, the accurate optical network topology can be obtained, through which the fiber connection conditions among the devices can be quickly identified, so that the management of different types of devices is facilitated, potential faults in each device can be quickly found, and the communication security of the optical network is improved.

In some specific implementations, before sending optical detection signals of different wavelengths to optical paths in the optical distribution network (ODN), the optical network topology generation method further includes: generating first mapping information and second mapping information. The first mapping information includes a correspondence relationship between port numbers of the preset splitters and wavelength numbers of preset optical detection signals, and the second mapping information includes a correspondence relationship between wavelengths and wavelength numbers of the preset optical detection signals.

The optical network may include a plurality of optical paths, each of which may include a preset splitter. The first mapping information and/or the second mapping information are information determined based on optical detection signal wavelength planning in the optical path and used for reflecting a mapping relationship between wavelengths of the optical detection signals and the preset splitters.

In some specific implementations, the first mapping information and/or the second mapping information may be represented in a table. For example, one table may be used to store a correspondence relationship between wavelengths and wavelength numbers of preset optical detection signals, while the other table may be used to store a correspondence relationship between port numbers of the preset splitters and wavelength numbers of preset optical detection signals; or the same table may also be used to represent a correspondence relationship of port numbers of the preset splitters, wavelengths of the preset optical detection signals, and the wavelength numbers, so as to facilitate quick query of relevant information (e.g., a port number, etc.) and accelerate acquisition of the information.

For example, a correspondence table between wavelengths and wavelength numbers of optical detection signals, and a correspondence table between wavelength numbers of optical detection signals and ports of preset splitters are defined according to wavelength planning. The optical detection signals of different and unique wavelengths correspond to unique and preset connection relationship between the wavelength division multiplexer and ports of the preset splitters. For example, a wavelength division multiplexer and multiple stages of preset splitters are arranged in sequence, and a first branch port of a first stage splitter is connected to a common port of a first second preset splitter.

In addition, the optical detection signals of different and unique wavelengths are transmitted over the corresponding optical paths, and the optical path pathloss information formed by backscatter signals of the optical detection signals may be used to determine a fiber length and a position of a splitter in the corresponding optical path.

In some specific implementations, when it is determined that the optical network termination (ONT) receives forward transmission signals of different and unique wavelengths, a wavelength number of the optical detection signal received by the ONT may be determined according to a wavelength number corresponding to the optical detection signal issued in advance by the optical network side device through a service signal to the ONT. Alternatively, the ONT may directly measure a specific wavelength of the received optical detection signal, and determine a wavelength number of the optical detection signal in conjunction with the previously obtained correspondence table between wavelengths and wavelength numbers of optical detection signals.

Further, according to the correspondence table between wavelength numbers of optical detection signals and ports of preset splitters, the ONT may further determine a unique optical path to which the ONT is uniquely and correctly connected.

For another example, the first mapping information and/or the second mapping information may be represented in a graphical manner. The above representations of the first mapping information and/or the second mapping information are merely examples, and the first mapping information and/or the second mapping information may be specifically set according to actual needs; other representations of the first mapping information and/or the second mapping information not described herein are also within the protection scope of the present application, and which are not described in detail here.

The first mapping information and/or the second mapping information reflect the correspondence relationship between wavelength numbers of preset optical detection signals and port numbers of preset splitters, so that software and hardware interfaces can be matched to accelerate confirmation of the port number of the preset splitter and facilitate acquisition of the optical network topology, and therefore, the optical network topology can be used for management of different types of devices, thereby improving the communication efficiency of the optical network.

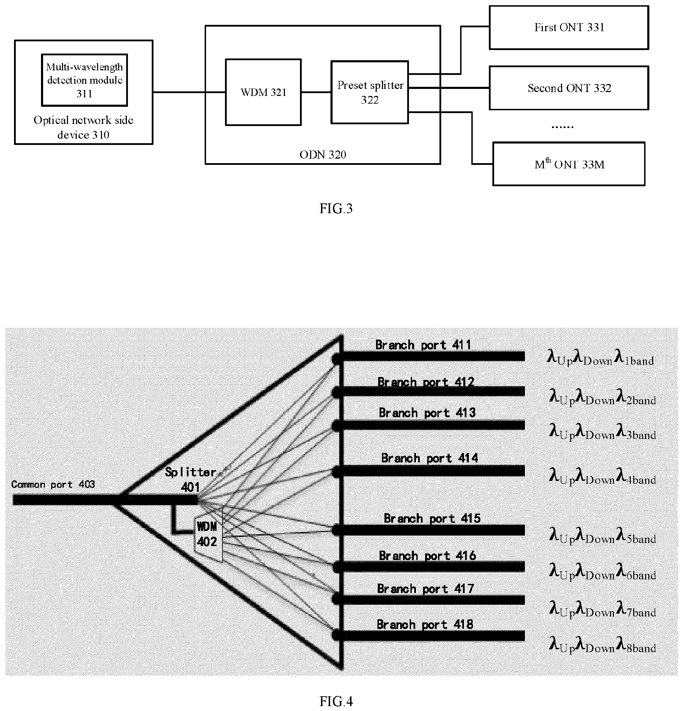

FIG. 3 shows a block diagram of a passive optical network system according to another embodiment of the present application. As shown in FIG. 3, the passive optical network system includes, but is not limited to:
an optical network side device 310, an optical distribution network 320, and at least one optical network termination (e.g., a first optical network termination 331, a second optical network termination 332, ..., an M^{th} optical network termination 33M, where M is the number of optical network terminations, and M is an integer greater than or equal to 1).

The optical network side device 310 may include: a multi-wavelength detection module 311, which can generate optical detection signals of various different wavelengths and process detection signals fed back by optical paths. For example, the function of a multi-wavelength OTDR may be provided.

The optical distribution network 320 includes: a wavelength division multiplexer 321 and a preset splitter 322. The preset splitter 322 can split and transmit a service optical signal and an optical detection signal between the optical network side device 310 and the plurality of optical network terminations.

The optical distribution network 320 may include a plurality of different stages of preset splitters configured to perform light splitting on different stages of optical fibers. For example, a first-stage preset splitter is configured to divide a backbone fiber (which, for example, may also be referred to as a backbone optical path) to obtain a plurality of first-stage (distribution) fibers; a second-stage preset splitter is configured to divide the first-stage fiber to obtain a plurality of second-stage (distribution) fibers; ... ; and a K^{th}-stage preset splitter is configured to divide the (K-1)^{th}-stage fiber to obtain a plurality of K^{th}-stage (distribution) fibers, where K is an integer greater than or equal to 1.

For example, FIG. 4 shows a schematic diagram of a first-stage preset splitter according to an embodiment of the present application. As shown in FIG. 4, the first-stage preset splitter includes, but is not limited to:
a splitter 401, a wavelength division multiplexing module 402, a common port 403, and a plurality of branch ports (e.g., a branch port 411, a branch port 412, a branch port 413, a branch port 414, a branch port 415, a branch port 416, a branch port 417, and branch port 418).

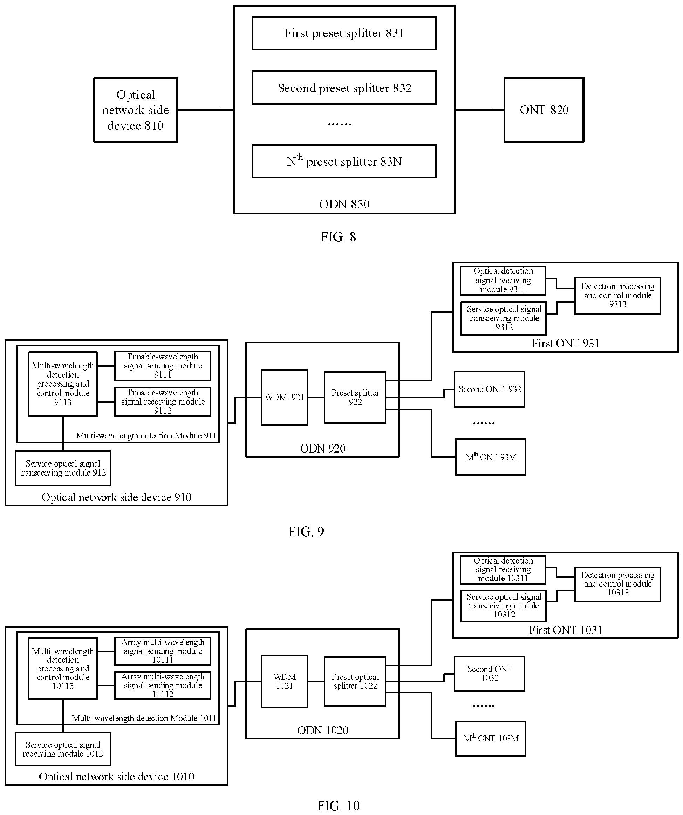

The splitter module 401 may be configured to distribute a power of a downlink continuous service optical signal input to the common port to each branch port to output, as well as aggregate uplink burst signals input to the respective branch ports to the common port to output. The wavelength division multiplexing module 402 may be configured to perform wavelength division multiplexing on wavelengths of optical detection signals. The splitter 401 and the wavelength division multiplexing module 402 are jointly used to process a backbone fiber input to the first-stage preset splitter to obtain a plurality of optical fiber branches. For example, as shown in FIG. 4, 8 first-stage distribution fibers can be obtained, i.e., first-stage distribution fibers with uplink and downlink optical detection signal bands being λ_{1band} , λ_{2band}, ..., λ_{8band}, respectively, where a downlink service optical signal is divided into 8 paths of λ_{down}, and an uplink service optical signal is divided into 8 paths of λᵤₚ .

The optical fibers may have the same bandwidth or have different bandwidths, so as to adapt to different use requirements.

It should be noted that, in a downlink direction, the first-stage preset splitter can separate a wavelength of a downlink service optical signal and a wavelength of a downlink optical detection signal transmitted through the backbone fiber, to transmit the downlink service optical signal through the splitter 401, and transmit the downlink optical detection signal through the wavelength division multiplexing module 402. The first-stage preset splitter can also combine the downlink service optical signal output from each branch of the splitter 401 and the downlink optical detection signal output from the wavelength division multiplexing module 402 to obtain a combined downlink signal, so that the combined downlink signal can be transmitted over the first-stage fiber.

In an uplink direction, the first-stage preset splitter can separate a wavelength of an uplink service optical signal and a wavelength of an uplink optical detection signal transmitted through the first-stage fiber, to transmit the uplink service optical signal through the splitter 401, and transmit a backscatter signal of the optical detection signal through the wavelength division multiplexing module 402 (the backscatter signal, after being received by the optical network side device, is used to generate optical path pathloss information, i.e., an OTDR curve of the optical path). The OTDR curve represents information of fiber loss of the backscatter optical signal power of the optical detection signal along a fiber line, and information of local power loss caused by inserting an optical device into a preset position of an optical fiber, or the like. The OTDR curve may be a curve in a two-dimensional coordinate system of optical power and fiber length. In addition, the first-stage preset splitter can also combine the uplink service optical signal output from each branch of the splitter 401 and the backscatter signal of the uplink optical detection signal output from the wavelength division multiplexing module 402 to obtain a combined uplink signal, so that the combined uplink signal can be transmitted over the backbone fiber.

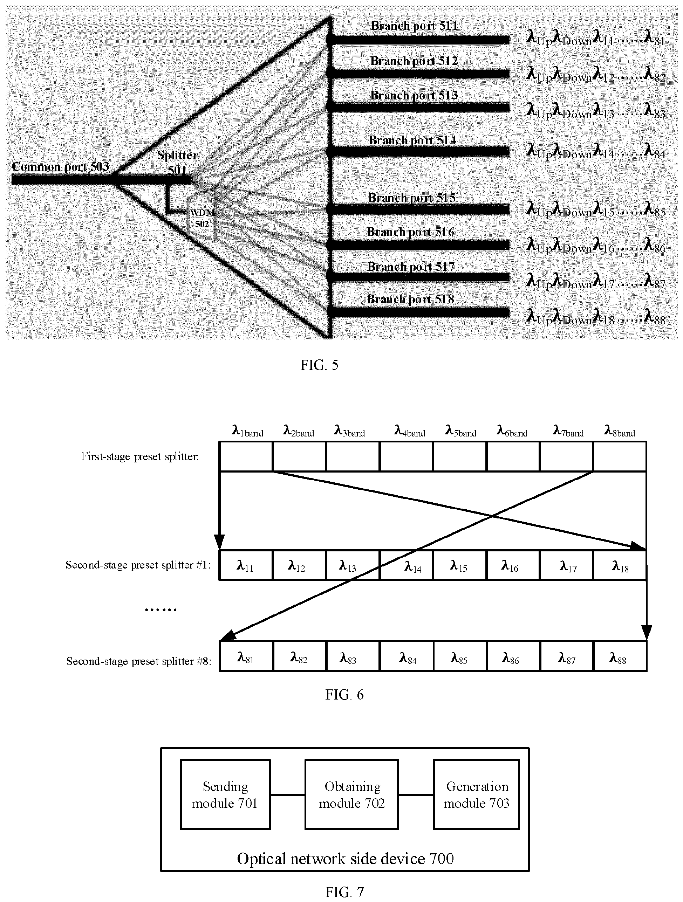

FIG. 5 shows a schematic diagram of a second-stage preset splitter according to an embodiment of the present application. As shown in FIG. 5, the second-stage preset splitter includes, but is not limited to: a splitter 501, a wavelength division multiplexing module 502, a common port 503, and a plurality of branch ports (e.g., a branch port 511, a branch port 512, a branch port 513, a branch port 514, a branch port 515, a branch port 516, a branch port 517, and branch port 518).

The wavelength division multiplexing module 502 may be configured to perform wavelength division multiplexing on wavelengths of a service optical signal and an optical detection signal. The splitter 501 and the wavelength division multiplexing module 502 are jointly used to process a first-stage fiber input to the second-stage preset splitter to obtain a plurality of second-stage fibers. For example, as shown in FIG. 5, 8*8 paths of second-stage fibers can be obtained. That is: a first-stage fiber with a fiber bandwidth λ_{1band} is divide into second-stage fibers with fiber bandwidths λ₁₁, λ₁₂ , ..., λ₁₈ ;a first-stage fiber with a fiber bandwidth λ_{2band} is divide into second-stage fibers with fiber bandwidths λ₂₁, λ₂₂, ..., λ₂₈ ;...; and a first-stage fiber with a fiber bandwidth λ_{8band} is divide into second-stage fibers with fiber bandwidths λ₈₁, λ₈₂, ..., λ₈₈.

Different stages of optical fibers may correspond to the same fiber bandwidth or different fiber bandwidths, so as to adapt to different use requirements.

Similar to the first-stage preset splitter, in the downlink direction, the second-stage preset splitter can separate a wavelength of a downlink service optical signal and a wavelength of a downlink optical detection signal transmitted through the first-stage fiber, to transmit the downlink service optical signal through the splitter 501, and transmit the downlink optical detection signal through the wavelength division multiplexing module 502. In addition, the second-stage preset splitter can also combine the downlink service optical signal output from each branch of the splitter 501 and the downlink optical detection signal output from the wavelength division multiplexing module 502 to obtain a combined downlink signal which can be transmitted over the second-stage fiber.

In the uplink direction, the second-stage preset splitter can separate a wavelength of an uplink service optical signal and a wavelength of an uplink optical detection signal transmitted through the second-stage fiber, to transmit the uplink service optical signal through the splitter 501, and transmit a backscatter signal of the optical detection signal through the wavelength division multiplexing module 502 (the backscatter signal, after being received by the optical network side device, is used to generate optical path pathloss information, i.e., the OTDR curve of the optical path). In addition, the second-stage preset splitter can combine the uplink service optical signal output from each branch of the splitter 501 and the backscatter signal of the uplink optical detection signal output from the wavelength division multiplexing module 502 to obtain a combined uplink signal which can be transmitted over the first-stage fiber.

By means of the above different stages of preset splitters, separation and transmission of the wavelength of the service optical signal and the wavelength of the optical detection signal can be implemented. Further, the different stages of preset splitters can combine wavelengths of the service optical signal and the optical detection signal, and then transmit the combined signal, so that the different stages of optical fibers can reach a maximum transmission efficiency.

In some specific implementations, before sending optical detection signals of different wavelengths to optical paths in the optical distribution network (ODN) in operation S201, the optical network topology generation method further includes: sending the first mapping information to the ONT so that the ONT matches a wavelength number or wavelength of an optical detection signal received by the ONT according to the second mapping information, to obtain a matching result; and sending the second mapping information to the ONT so that the ONT determines a port number of a preset splitter connected to the ONT according to the first mapping information and the matching result.

The feedback information is information determined by the ONT by analyzing a forward transmission signal of the received optical detection signal passing through the optical path, and the feedback information includes: the port number of the preset splitter in the optical path fed back by the ONT. In this case, the feedback information may include: ONT-disconnected optical path topology information.

In some specific implementations, the operation S203 of generating the optical network topology according to the feedback information may include: determining optical path topology information according to the port number of the preset splitter in the optical path fed back by the ONT, where the optical path topology information represents a logical connection relationship between ports of respective devices in the optical path; and determining the optical network topology according to the optical path topology information.

The first mapping information and/or the second mapping information sent to the ONT may be information transmitted over a service signal.

For example, the first mapping information and/or the second mapping information may be firstly broadcast to all ONTs through a service signal, so that all the ONTs in the network can determine wavelength numbers corresponding to different wavelengths of optical detection signals and port numbers of the preset splitter corresponding to the wavelength numbers; and then optical detection signals of different wavelengths are sent to the ODN, and the optical network side device receives and analyzes backscatter signals of the optical detection signals passing through the optical paths to generate pathloss information of the optical paths, i.e., an OTDR curve of the optical path. The ONT analyzes a forward transmission signal of the received optical detection signal passing through the optical path to determine a wavelength number corresponding to a wavelength of the optical detection signal, and compares the wavelength number of the optical detection signal with the wavelength number of each preset optical detection signal in the first mapping information and/or the second mapping information. Under the condition that the wavelength number of the optical detection signal is determined to be the same as the wavelength number of a preset optical detection signal, the port number of the preset splitter corresponding to the wavelength number of the optical detection signal can be obtained and reported to the optical network side device, so that the speed of generating the optical path logical topology by the optical network side device is increased, and the accuracy of the connection relationship of the devices in the optical path logical topology is improved.

In some specific implementations, before sending optical detection signals of different wavelengths to optical paths in the optical distribution network (ODN) in operation S201, the optical network topology generation method further includes: sending the second mapping information to the ONT so that the ONT matches a wavelength number of an optical detection signal received by the ONT according to the second mapping information, to determine a wavelength number of the optical detection signal.

The feedback information is information determined by the ONT by analyzing a forward transmission signal of the received optical detection signal passing through the optical path, and the feedback information includes: the wavelength number of the optical detection signal fed back by the ONT. In this case, the feedback information may include: ONT-connected optical path topology information.

In some specific implementations, the operation S203 of generating the optical network topology according to the feedback information includes: generating optical path topology information according to the first mapping information and the wavelength number of the optical detection signal fed back by the ONT, where the optical path topology information represents a logical connection relationship between ports of respective devices in the optical path; and determining the optical network topology according to the optical path topology information.

In some specific implementations, the feedback information is information determined by the optical network termination (ONT) by analyzing a forward transmission signal of the received optical detection signal passing through the optical path, and the feedback information includes: feedback from the ONT about whether an optical detection signal is received, or a wavelength of a received optical detection signal, or a wavelength number of a received optical detection signal. The feedback information may include: ONT-connected optical path topology information.

In some specific implementations, the operation S203 of generating the optical network topology according to the feedback information includes: matching, according to the first mapping information and the second mapping information, the wavelength number corresponding to the received optical detection signal or the wavelength of the received optical detection signal fed back by the ONT, to determine a port number of a preset splitter connected to the ONT; determining optical path topology information according to the port number of the preset splitter in the optical path, where the optical path topology information represents a logical connection relationship between ports of respective devices in the optical path; and determining the optical network topology according to the optical path topology information.

In some specific implementations, the optical network side device may match the first mapping information and the second mapping information according to a number of a working wavelength (or a working wavelength) sent from the optical network side device itself to obtain a port number of a preset splitter. In the above process, the optical network side device does not issue the first mapping information and the second mapping information, but determines the port number of the preset splitter merely by analyzing the wavelength number corresponding to the optical detection signal received by the optical network side device and fed back by the ONT, or the wavelength of the received optical detection signal. Therefore, the port numbers of different preset splitters can be determined, and the locating accuracy of the optical path can be improved.

In some specific implementations, the feedback information is feedback information generated by the optical network side device by analyzing a backscatter signal of the received optical detection signal passing through the optical path; and the feedback information further includes pathloss information of the optical path.

In some specific implementations, before the operation S203 of generating the optical network topology according to the feedback information, the optical network topology generation method further includes: determining fiber length matching information according to the pathloss information of the optical path and length information of each optical fiber in the optical network; determining, according to the fiber length matching information, position information of each stage of preset splitter in the optical path; searching the first mapping information according to the wavelength number of the optical detection signal to determine a port number of each stage of preset splitter in the optical path; generating optical path topology information according to the position information of each stage of preset splitter in the optical path and the port number of each stage of preset splitter in the optical path; and determining the optical network topology according to the optical path topology information.

The optical path topology information may be information on a connection relationship of ONT-disconnected optical paths. The pathloss information may include: insertion loss information of an optical device represented in the form of an OTDR curve, consumed optical power information with the increase of the optical fiber link, and the like.

For example, the pathloss information can also represent whether there is loss in the optical path. For example, there may be a transmission device, and a ratio of an emitting light intensity to an incident light intensity of the transmission device is defined as insertion loss; or communication environment information (e.g., optical power information, etc.) corresponding to the optical path may be included in the pathloss information.

The obtained multiple pieces of pathloss information are matched with the fiber length information in the optical network, so that fiber length matching information is determined and various pieces of fiber length information can correspond to different pieces of pathloss information of optical paths. Therefore, the length of each optical fiber can be determined quickly based on the fiber length matching information, and each stage of optical path in the optical network can be identified, thereby accelerating generation of the optical network topology.

In some specific implementations, the optical path may be an optical path corresponding to an ONT, or an optical path corresponding to a wavelength of an optical detection signal.

By comparing the pathloss information of the optical path with the fiber length matching information, a fiber length corresponding to a certain section of optical path with linear attenuation in the power value can be obtained, and then matched with the port number of each stage of preset splitter in the optical path to obtain position information of each stage of preset splitter in the optical path, so that the position of each stage of preset splitter is determined, and the optical path can be conveniently located.

The port numbers of the respective stages of preset splitters in the optical path corresponding to the ONT can represent the ports of a plurality of preset splitters to be passed by an optical detection signal sent from the optical network side device to the ONT, so that the network connection information between the optical network side device and the ONT is determined. By obtaining the port numbers of the respective stages of preset splitters in the optical path corresponding to a plurality of ONTs, the optical network topology can be quickly and accurately determined, and the topology structure in the optical network can be dynamically and accurately acquired, so that the optical network topology does not need to be obtained in a manual recording mode any more, which can not only reduce the labor cost, but also update the connection relationship of the devices in the optical network dynamically in real time, and improve the accuracy of the connection relationship of the devices in the optical network topology.

For example, the fiber length matching information includes: information of a backscatter optical power linearly decreasing as a fiber transmission length increases, and an optical power insertion loss of a preset optical device.

The optical power insertion loss of the preset optical device is a local optical power loss value caused by inserting an optical device into a preset position of an optical fiber. The property of the backscatter optical power linearly decreasing as the fiber transmission length increases means that an optical power loss value of fiber transmission increases linearly with the increase of fiber length.

Based on this linear relation, the fiber length information corresponding to a linear attenuation interval of Rayleigh backscatter optical power as a function of transmission length in different pieces of optical path pathloss information can be quickly and accurately obtained, so that different optical paths can be conveniently located.

For another example, determining, according to the fiber length matching information, position information of each stage of preset splitter in the optical path includes: obtaining position information of the optical network side device; and determining position information of each stage of preset splitter in the optical path according to length information of each stage of optical fiber in the optical path and the position information of the optical network side device.

In some specific implementations, the pathloss information of the optical path may be compared with the property of the Rayleigh backscatter optical power linearly decreasing as the fiber transmission length increases, and a preset optical device optical power insertion loss in the fiber length matching information, a length of the linear attenuation interval of Rayleigh backscatter optical power as a function of transmission length in the optical path pathloss information between position information corresponding to optical power insertion losses of the respective preset optical devices is the corresponding fiber length information of each stage, that is, the fiber length information of each stage in the optical path corresponding to the ONT (for example, the fiber length of an optical power linear attenuation interval between a first-stage preset splitter optical power insertion loss position and a second-stage preset splitter optical power insertion loss position in the optical path insertion loss information is 200m).

After the position information of the optical network side device is obtained, the position information of each stage of preset splitter in the optical path corresponding to the ONT can be accurately computed through the fiber length information in the optical path corresponding to the ONT and the position information of the optical network side device. For example, the optical path corresponding to the ONT includes 2 segments of distribution fibers, such as a first-stage distribution fiber and a second-stage distribution fiber. The first-stage distribution fiber has a length of 50m, and the second-stage distribution fiber has a length of 100m. When the position information of the optical network side device is represented in the form of plane coordinates (0, 0), it is obtained that the position information of the first preset splitter connected to the optical network side device is (0, 50); and the position information of the second preset splitter connected to the first preset splitter is (0, 150), so that the position information of each stage of preset splitter in the optical path corresponding to the ONT can be accurately obtained, and the locating accuracy of each stage of preset splitter can be improved.

In some specific implementations, the fiber length matching information may further include: power loss information in the optical path. For example, the optical path may use a port in the first-stage preset splitter as a start port, and use a port in a next-stage preset splitter as an end port. If an optical device is inserted into the optical path (or if there is a bend in the optical path), some insertion loss may be generated, which information represents power loss information and can be used to determine whether there is a fault or other optical devices in the optical path, thereby accurately determining whether further division is needed in the optical path, and thus accurately locating the optical path.

In some specific implementations, the feedback information further includes: at least one of recovery information of a pulse signal in an optical detection signal by the ONT, a port number of a preset splitter in the optical path corresponding to the ONT, a wavelength of an optical detection signal, spectrum information of an optical detection signal, or a wavelength number of an optical detection signal.

The recovery information of the pulse signal in the optical detection signal by the ONT represents power information, consumed resource information, and the like used by the ONT when recovering the pulse signal of the optical detection signal after receiving the optical detection signal.

The wavelength of the optical detection signal and the spectrum information of the optical detection signal can represent different properties of the optical detection signal. For example, different spectra of optical detection signals have different corresponding backscatter properties and refraction information, which can reduce an overlapping degree of feedback signals of the optical detection signals, so that different optical detection signals can be conveniently and accurately distinguished, and rapid detection of the optical path can be implemented.

If the ONT receiving the optical detection signal has a sufficient processing capacity, a port number of a preset splitter in the optical path corresponding to the ONT can be directly fed back to the optical network side device, so that the optical network side device can directly know the topology structure of the optical network between the optical network side device and the ONT from the feedback information, and thus, the generation speed of the optical network topology is increased.

When various devices in a PON system are detected, the OTDR is typically used for detection to determine which devices may have faults. However, the optical detection signals transmitted from the OTDR to the PON system will be attenuated while passing through an optical power splitter, making it difficult for some optical detection signals to penetrate through the optical power splitter and thus impossible to detect all devices. In addition, when the OTDR receives echo signals of a plurality of ONT branches, the plurality of echo signals may be overlapped each other, but the OTDR cannot distinguish the overlapped echo signals, or identify optical paths of different ONT branches, and thus cannot perform fault detection and analysis on optical paths of different ONT branches.

Currently, the following two detection methods are generally adopted:
1) A fiber length of each branch optical path connecting the ONTs is changed so that branch optical paths connected to each ONT have fiber lengths different from each other. In this manner, feedback signals fed back by the branch optical paths connected to each ONT can be fed back in a staggered mode, so that the feedback signals corresponding to different branch optical paths can be distinguished. Further, feedback to different ONTs may be staggered in a time dimension. For example, detection waveforms corresponding to feedback signals obtained at different periods are compared with detection waveforms corresponding to feedback signals without faults obtained at an initial stage of network establishment, to determine which ONT is connected to a branch optical path that may have a fault. However, this method can only enable staggered feedback of feedback signals of the branch optical paths connected to the ONT, while feedback signals of other optical paths may still be aliased, making it hard to well monitor an ONT-disconnected optical path. Meanwhile, this detection method cannot detect some faults such as a fiber macrobend, resulting in reduced security of the optical communication network.
2) Each ONT side and each OLT side are connected to an OTDR. The OTDR connected to the ONT may be configured to detect whether a branch fiber line from the ONT to a splitter module has a fault. The OTDR connected to the OLT may be configured to detect whether a backbone fiber line from the OLT to a splitter module has a fault. However, this will cause a dramatically increased number of OTDRs in the optical network communication system, and thus significantly increased cost of fault detection. In addition, the fault information of the branch fiber line detected by the OTDR connected to each ONT also needs to be transmitted to a network management system connected to the OLT, which increases the complexity of information transmission and reduces the communication efficiency of the optical network.

In some specific implementations, before operation S201, the first mapping information is generated. For example, the first mapping information is generated by:
planning port numbers of the plurality of preset splitters, to obtain port numbers of the plurality of preset splitters; determining, according to start ports and end ports of a plurality of optical paths and the port numbers of the plurality of preset splitters, port numbers of preset splitters in the plurality of optical paths; determining, according to the port numbers of preset splitters in the plurality of optical paths, a wavelength number of an optical detection signal passing through the optical path; and generating the first mapping information according to wavelength numbers of a plurality of optical detection signals and the port numbers of the corresponding preset splitters.

For example, the port numbers of the plurality of preset splitters may include: port numbers of a first-stage preset splitter (e.g., port number A, port number B, ..., port number Z, etc.), port numbers of a plurality of second-stage preset splitters (e.g., port number 1, port number 2, ..., port number 9, etc.), port numbers of a plurality of third-stage preset splitters (e.g., port number a, port number b, ..., port number z etc.), and the like.

If an optical path has a start port B and an end port 3, according to the port numbers of a plurality of preset splitters, it can be known that the optical path is an optical path connecting port B of the first-stage preset splitter and port 3 of the second-stage preset splitter. Further, according to the preset wavelength planning of optical detection signals (for example, a wavelength number of an optical detection signal is determined from the start port and the end port of the optical path), it can be determined that the wavelength number of the optical detection signal passing through the optical path is λ_{B3}. If an optical path has a start port 2 and an end port c, it can be determined that the wavelength number of the optical detection signal passing through the optical path is λ_{2c}. Likewise, other optical paths may be mapped in the same manner, so as to determine a correspondence relationship between wavelength numbers of the optical detection signals and start and end ports of the optical paths.

By planning port numbers of the plurality of preset splitters to obtain port numbers of the plurality of preset splitters, each port can be located conveniently. By determining, according to start ports and end ports of a plurality of optical paths and the port numbers of the plurality of preset splitters, port numbers of preset splitters in the plurality of optical paths, a port number of a preset splitter connected to the optical path can be accurately obtained, thereby facilitating troubleshooting of the optical path. By determining, according to the port numbers of preset splitters in the plurality of optical paths, a wavelength number of an optical detection signal passing through the optical path, the wavelength number of the optical detection signal to be used can be determined, so that the optical detection signal corresponding to the wavelength number can be used for detection of the optical path, and the detection accuracy is improved. By determining the first mapping information according to wavelength numbers of a plurality of optical detection signals and the port numbers of the corresponding preset splitters, subsequent detection of each optical path follows the first mapping information, so that the optical path can be conveniently and accurately located, and the troubleshooting efficiency and accuracy can be improved.

It should be noted that the above port numbers of the different stages of preset splitters are illustrated by way of example only, the number of port numbers may be specifically set according to actual needs, and other port numbers of different stages of preset splitters not illustrated herein are also within the protection range of the present application and are not described in detail here.

In some specific implementations, before operation S201, the second mapping information is generated by:
obtaining wavelengths of a plurality of preset optical detection signals; numbering the wavelengths of the preset optical detection signals respectively to obtain wavelength numbers corresponding to the preset optical detection signals; and generating second mapping information according to the wavelengths of the plurality of preset optical detection signals and the corresponding wavelength numbers thereof.

By numbering the wavelengths of the preset optical detection signals, the numbers corresponding to different wavelengths of optical detection signals can be obtained, and the wavelengths of a plurality of preset optical detection signals are in one-to-one correspondence with the corresponding wavelength numbers, so that the second mapping information is generated, which can clarify the wavelength numbers corresponding to different wavelengths of optical detection signals, and facilitate subsequent locating of the optical path.

For example, FIG. 6 shows a schematic diagram of wavelength planning of optical detection signals when two stages of preset splitters are used in an exemplary embodiment of the present application. As shown in FIG. 6, wavelengths of optical detection signals corresponding to the first-stage preset splitter may be divided into 8 segments, i.e., λ_{1band}, λ_{2band}, ..., λ_{8band}; and there may be 8 second-stage preset splitters, i.e., a second-stage preset splitter #1, ..., a second-stage preset splitter #8.

A wavelength of the optical detection signal corresponding to the second-stage preset splitter #1 is obtained by dividing λ_{1band} into equal parts periodically, so that wavelengths of 8 optical detection signals with the same bandwidth are obtained, where the wavelength bandwidths are λ₁₁, λ₁₂, ..., λ₁₈ .Likewise, a wavelength of the optical detection signal corresponding to the second-stage preset splitter # 8 is obtained by dividing λ_{8band} into equal parts periodically, so that wavelengths of 8 optical detection signals with the same bandwidth are obtained, where the wavelength bandwidths are λ₈₁, λ₈₂, ..., λ₈₈.

In addition, different wavelengths of optical detection signals correspond to different port numbers of preset splitters. For example, if the wavelength number of the optical detection signal is λ₁₁, it represents that the port numbers of the preset splitters corresponding to the wavelength of the optical detection signal are port 1 of the first-stage preset splitter and port 1 of the second-stage preset splitter #1. If the wavelength number of the optical detection signal is λ₈₅, it represents that the port numbers of the preset splitters corresponding to the wavelength of the optical detection signal are port 8 of the first-stage preset splitter and port 5 of the second-stage preset splitter #8.

By dividing different wavelengths of optical detection signals into equal parts periodically, the optical detection signals can be fully utilized so that different wavelengths of optical detection signals correspond to different ports of preset splitters, and when acquiring a wavelength number of an optical detection signal, the optical network side device can quickly know which segment of optical path is specifically detected with the optical detection signal, thereby increasing the detection speed of the optical path and improving the generation efficiency of the optical network topology.

In some specific implementations, after the operation S203 of generating the optical network topology according to the feedback information, the optical network topology generation method further includes: obtaining information to be acknowledged fed back by the optical path, where the information to be acknowledged represents the optical path topology information; and determining whether the optical path is abnormal according to the information to be acknowledged and the optical network topology.

For example, the information to be acknowledged is information that represents a connection relationship of ports in multiple stages of ONT-connected optical path segments. The optical path includes: a backbone optical path segment, and/or a plurality of different stages of optical path segments, where the backbone optical path segment and the plurality of different stages of optical path segments each include a preset splitter.

The information to be acknowledged fed back by the ONT through the multiple stages of optical path segments is compared with the optical network topology to determine whether the connection relationship of the multiple stages of optical path segments carried in the information to be acknowledged is the same as the connection relationship of the optical path segments in the optical network topology. If it is determined that the connection relationship of the multiple stages of optical path segments carried in the information to be acknowledged is the same as the connection relationship of the optical path segments in the optical network topology, it is determined that the optical path connected to the ONT has no fault. Otherwise, it is determined that the optical path segment connected to the ONT has a fault, and troubleshooting is further performed on the fiber connection connected to the ONT to ensure normal communication between the multiple stages of optical paths.

For example, determining whether the optical path is abnormal according to the information to be acknowledged and the optical network topology includes: matching the optical path topology information with the optical network topology, to determine whether the optical path topology information is changed; and determining, under the condition of determining that the optical path topology information is changed, that the optical path is abnormal.

The information to be acknowledged may include: a connection relationship of ports in multiple stages of ONT-connected optical path segments. For example, the optical network side device is connected to the ONT through a backbone optical path segment and a first-stage optical path segment, where the information to be acknowledged may include: an input port number and an output port number of the backbone optical path segment, and an input port number and an output port number of the first-stage optical path segment.

When the detected connection relationship of ports in the optical path only includes an input port number and an output port number of the backbone optical path, it indicates that the first-stage optical path segment has a fault. For example, the type of the fault may include any one or more of fiber breakage, preset splitter missing, or fiber macrobend.

When the detected connection relationship of ports in the optical path includes an input port number and an output port number of the backbone optical path, and an input port of the first-stage optical path, but does not include an output port number of the first-stage optical path segment, it indicates that the connection relationship between the output port of the first-stage optical path and the ONT may be broken, and further troubleshooting and repair of the connection relationship are needed to ensure normal communication of the ONT.

By confirming the connection relationship of ports in multiple stages of ONT-connected optical path segments, and comparing and confirming the port numbers of the multiple stages of optical path segments connected to the ONT and the corresponding port connection relationship thereof with the optical network topology, it can be determined whether the connection relationship of ports in the multiple stages of optical path segments is changed, so that when the connection relationship of ports in a certain stage of optical path segment is determined to be changed, it is determined that that stage of optical path segment has a fault, thereby facilitating accurate locating of the multiple stages of optical paths, and improving the detection accuracy of faults.

FIG. 7 shows a block diagram of an optical network side device according to an embodiment of the present application. The optical network side device is connected to an optical distribution network (ODN). As shown in FIG. 7, the optical network side device 700 includes a sending module 701, an obtaining module 702, and a generation module 703.

The sending module 701 is configured to send optical detection signals of different wavelengths to optical paths in an optical distribution network (ODN), where the ODN is communicatively connected to at least one optical network termination (ONT).

The obtaining module 702 is configured to obtain feedback information returned via the optical paths, where the feedback information is information for determining a connection relationship of preset splitters in the ODN.

The generation module 703 is configured to generate an optical network topology according to the feedback information.

It should be noted that the optical network side device 700 may further perform any one of the optical network topology generation methods according to the embodiments of the present application, so as to facilitate management and use of the optical network topology.

In this embodiment, by sending optical detection signals of different wavelengths to optical paths in the optical distribution network (OND) through the sending module, the optical network side device can detect different optical paths based on the optical detection signals of different wavelengths, so that different optical paths can be detected and comprehensive detection of the optical paths can be improved; by obtaining feedback information returned via the optical paths through the obtaining module, a detection result of each optical path can be determined, and the optical fiber connection condition in the optical path can be well determined through the feedback information, thereby facilitating subsequent processing; and by generating the optical network topology according to the feedback information through the generation module, the optical network topology does not need to be obtained in a manual recording mode any more, which can not only reduce the labor cost, but also update the connection relationship of the devices in the optical network dynamically in real time, and improve the accuracy of the connection relationship of the devices in the optical network topology.

FIG. 8 shows a block diagram of an optical network topology generation system according to an embodiment of the present application. As shown in FIG. 8, the optical network topology generation system includes: an optical network side device 810 and at least one optical network termination 820 connected through an optical distribution network 830. The optical distribution network 830 includes at least one preset splitter (for example, the optical distribution network 830 includes a first preset splitter 831, a second preset splitter 832, ..., an N^{th} preset splitter 83N, where N represents the number of preset splitters, and N is an integer greater than or equal to 1).

The optical network side device 810 is configured to perform any one of the optical network topology generation methods according to the embodiments of the present application. Meanwhile, the optical network side device 810 receives and analyzes backscatter signals of the optical detection signals passing through the optical paths to generate pathloss information of the optical paths, i.e., an OTDR curve of the optical path.

The optical network termination 820 is configured to receive optical detection signals of different wavelengths sent from the optical network side device through the optical path in the ODN; analyze the optical detection signals to generate feedback information; and send the feedback information to the optical network side device through the ODN so that the optical network side device generates an optical network topology according to the feedback information.

The preset splitter is configured to split and transmit a service optical signal and an optical detection signal between the optical network side device 810 and the ONT.

For example, the optical network termination 820 obtains a wavelength corresponding to an optical detection signal by sensing the optical detection signal, and analyzes the wavelength of the optical detection signal (and/or the first mapping information and/or the second mapping information) to determine feedback information.

In some specific implementations, the optical network side device includes: an optical line terminal (OLT) and an optical time domain reflectometer (OTDR). The OLT includes a module for sending and receiving service optical signals, and the OTDR is configured to send optical detection signals of different wavelengths and receive Rayleigh backscatter signals of the optical detection signals. The optical detection signals of different wavelengths are signals implemented based on a switch-controlled array laser or a tunable laser.

For example, the OTDR may send an optical detection signal of tunable wavelength to each device in the optical network, and/or the OTDR can receive feedback signals fed back through different stages of optical paths, where the feedback signals are in one-to-one correspondence with the optical detection signal of tunable wavelength.

For another example, the optical network side device may be connected to a wavelength division multiplexer, and then connected to a preset splitter through the wavelength division multiplexer. The wavelength division multiplexer may combine wavelengths of a detection optical signal and a downlink service optical signal to obtain a combined downlink signal which can be transmitted over the backbone fiber.

In some implementations, the ODN includes: an optical path determined by N stages of cascaded preset splitters, and/or an optical path determined by the preset splitter and the ONT.

A wave band of an optical detection signal output from an (N-1)^{th}-stage preset splitter is used for wavelength demultiplexing of a plurality of N^{th}-stage preset splitters, and ports of each preset splitter correspond to a different wavelength property of optical detection signals, where N is an integer greater than 1.

It should be noted that the cascaded N stages of preset splitters may be implemented by one optical power splitter, or may be implemented by a plurality of (e.g., 2 or 3) independent optical power splitters.

The N^{th}-stage preset splitter can perform wavelength demultiplexing on the wave band of the optical detection signal output from the (N-1)^{th}-stage preset splitter. In other words, multiple wavelengths of signals in the wave band (e.g., single-mode fiber) of the optical detection signal output from the (N-1)^{th}-stage preset splitter may be split to obtain a plurality of optical detection signal wavelengths with different properties.

The wavelength division multiplexer may be implemented by a filter combination, or may be implemented by a periodic array waveguide grating (AWG).

In some specific implementations, the optical network side device includes: an optical line terminal (OLT) and an optical time domain reflectometer (OTDR).

The OLT includes a module for sending and receiving service optical signals, and the OTDR is configured to send optical detection signals of different wavelengths and receive backscatter signals of the optical detection signals. The optical detection signals of different wavelengths are signals implemented by a device including any one of a switch-controlled array laser, a tunable laser, a broadband laser source plus comb filter, a wavelength division multiplexer, or an array laser.

In some specific implementations, the ODN includes: an optical path determined by N stages of cascaded preset splitters, and/or an optical path determined by the preset splitter and the ONT.

A wave band of an optical detection signal output from an (N-1)^{th}-stage preset splitter is used for wavelength demultiplexing of a plurality of Nth-stage preset splitters, and ports of each preset splitter correspond to a different wavelength property of optical detection signals, where N is an integer greater than 1.

In some specific implementations, the preset splitter includes: a splitter and a wavelength division multiplexer. The splitter is configured to transmit the service optical signal. The wavelength division multiplexer is configured to transmit a backscatter signal and a forward transmission signal of the optical detection signal.

The service optical signal has a wavelength different from the optical detection signal. In addition, the wavelength division multiplexer may further periodically subdivide the wavelength of the optical detection signal to plan the wavelength of the optical detection signal, so that the same stage of optical power splitters are consistent in specifications, thereby accelerating identification of the port numbers corresponding to different optical detection signals.

In some specific implementations, the preset splitter further includes: a combiner/splitter connected to one splitter and one wavelength division multiplexer, respectively. The combiner/splitter is configured to multiplex and/or demultiplex wavelengths of the service optical signal and the optical detection signal.

For example, the combiner/splitter includes: a common port combiner/splitter and a branch port combiner/splitter. The common port combiner/splitter is connected to one splitter and a common port of one wavelength division multiplexer, respectively, and the branch port combiner/splitter is connected to one splitter branch to a branch corresponding to one wavelength division multiplexer, respectively.

In this embodiment, the optical network side device 810 and at least one optical network termination 820 are connected through the optical distribution network 830, where the optical distribution network 830 includes at least one preset splitter in which each port is preset and planned and corresponds to a different wavelength property of optical detection signals, so that the optical network side device can detect and troubleshoot each optical path conveniently, and quickly identify the connection relationship of various optical paths, thereby implementing topology visualization of the entire network route of the passive optical network as well as rapid and accurate fault detection of different optical paths (e.g., an ONT-connected optical path, and/or, an ONT-disconnected optical path, etc.), and improving communication security of the optical network.

It should be noted that the present disclosure is not limited to the specific configurations and processing described in the above embodiments and shown in the figures. For convenience and simplicity of description, detailed description of a known method is omitted here, and for the specific working processes of the system, the modules and the units described above, reference may be made to corresponding processes in the foregoing method embodiments, which are not repeated here.

FIG. 9 shows a block diagram of a passive optical network system according to yet another embodiment of the present application. As shown in FIG. 9, the passive optical network system architecture includes, but is not limited to:
an optical network side device 910, an optical distribution network 920, and a plurality of optical network terminations (e.g., a first optical network termination 931, a second optical network termination 932, ..., an Mth optical network termination 93M, where M is the number of optical network terminations, and M is an integer greater than or equal to 1).

The optical network side device 910 includes: a multi-wavelength detection device 911 and a service optical signal transceiving module 912. The multi-wavelength detection device 911 may include a tunable-wavelength signal sending module 9111, a tunable-wavelength signal receiving module 9112, and a multi-wavelength detection processing and control module 9113.

The tunable-wavelength signal sending module 9111 of the multi-wavelength detection device 911 may be implemented by a tunable laser technology or a switch-controlled array laser, and configured to generate an optical detection signal of a tunable single wavelength within a certain period. It should be noted that the optical detection signal sending module 9111 sends the tunable-wavelength optical detection signal; and obtains a control signal sent from the multi-wavelength detection processing and control module 9113, to implement intelligent control of sending of the tunable-wavelength optical detection signal. The tunable-wavelength signal receiving module 9112 is configured to receive a power of a Rayleigh backscatter signal corresponding to the optical detection signal, and generate optical path pathloss information and the like.

The multi-wavelength detection processing and control module 9113 is configured to control signal sending and wavelength variations of the tunable-wavelength signal sending module 9111; issue, through the service optical signal transceiving module 912, first mapping information and/or second mapping information, and a wavelength number corresponding to the optical detection signal currently sent; receive, through the service optical signal transceiving module 912, feedback information of the optical detection signal sent from the ONT, and optical path pathloss information of the optical detection signal sent from the tunable-wavelength signal receiving module 9112; and process the feedback information of the optical detection signal sent from the ONT received through the service optical signal transceiving module 912.

The multi-wavelength detection processing and control module 9113 may be further configured to receive the feedback information of the optical detection signal sent from the tunable-wavelength signal receiving module 9112, and the optical path pathloss information sent from the tunable-wavelength signal receiving module 9112; and process the information to generate an optical network topology.

The service optical signal transceiving module 912 is configured to receive service optical signals sent from different optical network terminations, and parse the service optical signals to obtain a wavelength number of an optical detection signal fed back by each optical network termination; and send the wavelength number of the optical detection signal to the multi-wavelength detection processing and control module 9113, so that the multi-wavelength detection processing and control module 9113 further confirms and analyzes the feedback information of the optical detection signal.

The optical distribution network 920 may include: a wavelength division multiplexer 921 and a preset splitter 922.

Each optical network termination may include: an optical detection signal receiving module and a service optical signal transceiving module. For example, the first network termination 931 includes: an optical detection signal receiving module 9311, a service optical signal transceiving module 9312, and a detection processing and control module 9313.

The optical detection signal receiving module 9311 may be configured to measure a wavelength of an optical detection signal; and/or, measure an electrical signal of an OTDR pulse signal; and/or, confirm, upon receiving the optical detection signal, transceiving power variation information corresponding to the optical detection signal.

The detection processing and control module 9313 may be configured to receive first mapping information and/or second mapping information sent from the service optical signal transceiving module 9312, and a wavelength number corresponding to the optical detection signal currently sent; receive optical detection information (e.g., the pulse signal in the optical detection signal from the ONT, the wavelength of the optical detection signal, spectrum information of the optical detection signal, power information of the optical detection signal, etc.) sent from the optical detection signal receiving module 9311; judge, based on the optical detection signal, whether a wavelength number signal of the optical detection signal currently issued through the service signal is received; and determine, according to the obtained first mapping information and/or second mapping information, and information of the optical detection signal and the wavelength number corresponding to the optical detection signal information currently sent, information like a wavelength number of the optical detection signal, and a port number of the preset splitter connected to the first optical network termination 931, and then, send the information to the optical network side device 910 through the service optical signal transceiving module 9312.

In this embodiment, different wavelengths of optical detection signals may be sent to the optical distribution network 920 through the tunable-wavelength signal sending module 9111, while the wavelength number of the optical detection signal currently sent by the optical network termination (ONT) is broadcast through a downlink service signal. The optical network side device receives and analyzes backscatter signals of the optical detection signals passing through the optical paths to generate pathloss information of the optical paths, i.e., an OTDR curve of the optical path. The optical network termination (ONT) receives a forward transmission signal of the optical detection signal passing through the optical path, and analyzes the optical detection signal. For example, the optical network termination (ONT) may demodulate, through the service optical signal transceiving module 9312, a correspondence table between wavelength numbers of optical detection signals and corresponding port numbers thereof, and a mapping table between wavelength numbers of optical detection signals and port numbers of preset splitters, pre-obtained in a downlink service signal, and send the obtained tables to the detection processing and control module 9313. The detection processing and control module 9313 determines a wavelength number of the received optical detection signal and a corresponding port number of the preset splitter, and feeds back the wavelength number of the optical detection signal to the optical network side device through the service optical signal transceiving module 9312, so that the multi-wavelength detection processing and control module 9113 in the optical network side device receives the wavelength number of the optical detection signal, thereby accelerating the analysis of the optical detection signal. In addition, by obtaining the feedback information fed back by the optical path through the tunable-wavelength signal receiving module 9112, a detection result of the optical path can be determined, and the optical fiber connection condition in the optical path can be well determined through the feedback information, thereby facilitating subsequent processing; and The multi-wavelength detection processing and control module 9113 in the optical network side device 910 can generate an optical network topology according to the feedback information, the first mapping information and/or the second mapping information, where the first mapping information is information reflecting a mapping relationship between wavelength numbers of preset optical detection signals and port numbers of preset splitters, and the second mapping information is information reflecting a mapping relationship between wavelengths of preset optical detection signals and corresponding wavelength numbers thereof. The feedback information may include: ONT-connected optical path topology information sum ONT-disconnected optical path topology information.

By means of this passive optical network system, the optical network topology does not need to be obtained in a manual recording mode any more, which can not only reduce the labor cost, but also update the connection relationship of the devices in the optical network dynamically in real time, and improve the accuracy of the connection relationship of the devices in the optical network topology.

FIG. 10 shows a block diagram of a passive optical network system according to yet another embodiment of the present application. As shown in FIG. 10, the passive optical network system architecture includes, but is not limited to:
an optical network side device 1010, an optical distribution network 1020, and a plurality of optical network terminations (e.g., a first optical network termination 1031, a second optical network termination 1032, ..., an Mth optical network termination 103M, where M is the number of optical network terminations, and M is an integer greater than or equal to 1).

The optical network side device 1010 includes: a multi-wavelength detection device 1011 and a service optical signal transceiving module 1012. The multi-wavelength detection device 1011 may include: an array multi-wavelength signal sending module 10111, an array multi-wavelength signal receiving module 10112, and a multi-wavelength detection processing and control module 10113. The array multi-wavelength signal receiving module 10112 is configured to receive a power of Rayleigh backscatter signals corresponding to multiple wavelengths of optical detection signals, and generate optical path pathloss information corresponding to each wavelength and the like.

The multi-wavelength detection processing and control module 10113 is configured to control signal sending and wavelength variations of the tunable-wavelength signal sending module 10111; issue, through the service optical signal transceiving module 1012, first mapping information and/or second mapping information; receive, through the service optical signal transceiving module 1012, feedback information of the optical detection signal sent from the ONT, and receive the feedback information of the optical detection signal sent from the array multi-wavelength signal receiving module 10112; and process the feedback information of the optical detection signal sent from the ONT received through the service optical signal transceiving module 1012. The multi-wavelength detection processing and control module 10113 is further configured to control the information of the optical detection signal sent from the array multi-wavelength signal receiving module 10112, and the multi-wavelength optical path pathloss information from the array multi-wavelength signal receiving module 10112, and process the information to generate an optical network topology.

The feedback information may include: ONT-connected optical path topology information sum ONT-disconnected optical path topology information. The multi-wavelength detection device 1011 may be implemented by a broadband laser source plus comb filter (not shown), a wavelength division multiplexer, or an array laser (not shown), and configured to generate various optical detection signals of different wavelengths within a certain period.

The service optical signal transceiving module 1012 is configured to receive service optical signals sent from different optical network terminations, and parse the service optical signals to obtain a wavelength number of the received optical detection signal, or a port number of a preset splitter, fed back by each optical network termination; and send the wavelength number of the optical detection signal to the multi-wavelength detection processing and control module 10113, so that the multi-wavelength detection processing and control module 10113 further confirms and analyzes the feedback information of the optical detection signal.

The optical distribution network 1020 includes: a wavelength division multiplexer 1021 and a preset splitter 1022.

Each optical network termination may include: an optical detection signal receiving module and a service optical signal transceiving module. For example, the first network termination 1031 includes: an optical detection signal receiving module 10311, a service optical signal transceiving module 10312, and a detection processing and control module 10313.

The detection processing and control module 10313 is configured to receive first mapping information and/or second mapping information sent from the service optical signal transceiving module 10312; receive optical detection information (e.g., a wavelength of the optical detection signal from the ONT) sent from the optical detection signal receiving module 10311; determine, according to the obtained first mapping information and/or second mapping information, tables, and optical detection information, information like a wavelength number of the optical detection signal, and a port number of the preset splitter connected to the first optical network termination 1031, and then, send the information to the optical network side device 1010 through the service optical signal transceiving module 10312.

The optical detection signal receiving module 10311 may be configured to measure a working wavelength of an optical detection signal. The multi-wavelength detection device 1011 generates the array multi-wavelength signal in an array manner, so that different wavelengths of optical detection signals can be obtained more conveniently and quickly, and the detection speed of each device in the optical network is increased.

By sending optical detection signals of different wavelengths from the array multi-wavelength signal sending module 10111, optical paths can be detected based on the optical detection signals of different wavelengths, so that different optical paths can be detected and comprehensive detection of the optical paths can be improved. Further, the optical network termination receives the optical detection signal through an optical detection signal transceiving module, and analyzes a wavelength of the optical detection signal. For example, according to a pre-obtained correspondence table between wavelengths of optical detection signals and corresponding wavelength numbers thereof, the termination can determine a wavelength number of the received optical detection signal and feed back the wavelength number of the optical detection signal to the optical network side device through the optical detection signal transceiving module, so that the array multi-wavelength signal receiving module 10112 in the optical network side device receives the wavelength number of the optical detection signal, thereby accelerating the analysis of the optical detection signal. In addition, by obtaining the feedback information fed back by the optical path through the array multi-wavelength signal receiving module 10112, a detection result of the optical path can be determined, and the optical fiber connection condition in the optical path can be well determined through the feedback information, thereby facilitating subsequent processing; and the optical network side device 1010 can generate an optical network topology according to the feedback information, the first mapping information and/or the second mapping information, where the first mapping information and/or the second mapping information are information reflecting a mapping relationship between wavelengths of preset optical detection signals and port numbers of preset splitters. Therefore, by means of this passive optical network system, the optical network topology does not need to be obtained in a manual recording mode any more, which can not only reduce the labor cost, but also update the connection relationship of the devices in the optical network dynamically in real time, and improve the accuracy of the connection relationship of the devices in the optical network topology.

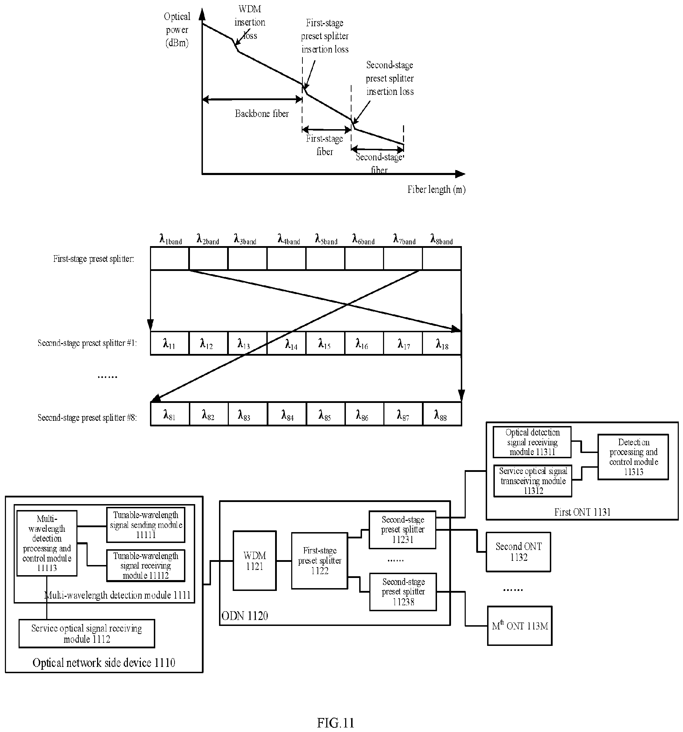

FIG. 11 shows a block diagram of an optical network topology generation system according to another embodiment of the present application. As shown in FIG. 11, the optical network topology generation system includes, but is not limited to:
an optical network side device 1110, an optical distribution network 1120, and a plurality of optical network terminations (e.g., a first optical network termination 1131, a second optical network termination 1132, ..., an Mth optical network termination 113M, where M is the number of optical network terminations, and M is an integer greater than or equal to 1).

The optical network side device 1110 includes: a multi-wavelength detection device 1111 and a service optical signal transceiving module 1112. The multi-wavelength detection device 1111 may include: a tunable-wavelength signal sending module 11111, a tunable-wavelength signal receiving module 11112, and a multi-wavelength detection processing and control module 11113.

The tunable-wavelength signal sending module 11111 of the multi-wavelength detection module 1111 may be implemented by a tunable laser technology or a switch-controlled array laser, and configured to generate an optical detection signal of a tunable single wavelength within a certain period. The service optical signal transceiving module 1112 is configured to receive service optical signals sent from different optical network terminations, and parse the service optical signals to obtain a wavelength number of an optical detection signal fed back by each optical network termination; and send the wavelength number of the optical detection signal to the multi-wavelength detection processing and control module 11113, so that the multi-wavelength detection processing and control module 11113 further confirms and analyzes the feedback information of the optical detection signal.

The multi-wavelength detection processing and control module 11113 is configured to control signal sending and wavelength variations of the tunable-wavelength signal sending module 11111; issue, through the service optical signal transceiving module 1112, first mapping information and/or second mapping information, and a wavelength number corresponding to the optical detection signal currently sent; receive, through the service optical signal transceiving module 1112, information of the optical detection signal sent from the ONT, and receive the feedback information of the optical detection signal sent from the tunable-wavelength signal receiving module 11112; process the information of the optical detection signal sent from the ONT received through the service optical signal transceiving module 1112; and the multi-wavelength detection processing and control module 11113 is configured to receive the information of the optical detection signal sent from the tunable-wavelength signal receiving module 11112, and process the information to generate an optical network topology. The feedback information may include: ONT-connected optical path topology information sum ONT-disconnected optical path topology information.

The optical distribution network 1120 may include: a wavelength division multiplexer 1121, a first-stage preset splitter 1122, and 8 second-stage preset splitters (as shown in FIG. 11, a second-stage preset splitter 11231, ..., a second-stage preset splitter 11238).

It should be noted that different devices are connected through optical paths. For example, an optical fiber connected between the wavelength division multiplexer 1121 and the first-stage preset splitter 1122 may be referred to as a backbone fiber; an optical fiber connected between the first-stage preset splitter 1122 and each second-stage preset splitter may be referred to as a first-stage fiber (for example, an optical fiber connected between the first-stage preset splitter 1122 and the second-stage preset splitter 11231 is a first-stage fiber, etc.); and an optical fiber connected between each second-stage preset splitter and each optical network termination may be referred to as a second-stage fiber (e.g., an optical fiber connected between the second-stage preset splitter 11231 and the first optical network termination 1131 is a second-stage fiber).

Each optical network termination may include: an optical detection signal transceiving module, and a service optical signal transceiving module. For example, the first network termination 1131 includes: an optical detection signal receiving module 11311, a service optical signal transceiving module 11312, and a detection processing and control module 11313.

The detection processing and control module 11313 may be configured to receive first mapping information and/or second mapping information sent from the service optical signal transceiving module 11312; receive optical detection information (e.g., the pulse signal in the optical detection signal from the ONT, the wavelength of the optical detection signal, spectrum information of the optical detection signal, power information of the optical detection signal, etc.) sent from the optical detection signal receiving module 11311; determine, according to the obtained first mapping information and/or second mapping information, tables, optical detection information, and a wavelength number corresponding to the optical detection signal information currently sent, information like a wavelength number of the optical detection signal, and a port number of the preset splitter connected to the first optical network termination 1131, and then, send the information to the optical network side device 1110 through the service optical signal transceiving module 11312.

By connecting the optical network side device 1110 and each optical network termination with different stages of optical fibers, the optical network side device 1110 can be connected to more optical network terminations, and thus provide communication services for more optical network terminations.

FIG. 11 further shows optical path pathloss information, that is, information of variations in a Rayleigh backscatter optical power of different wavelengths of optical detection signals passing through optical paths as a function of transmission length in a coordinate system with the optical power as an ordinate and the fiber length as an abscissa, where the figure includes multiple segments of curves divided by optical power insertion loss of a preset optical device (for example, a curve representing a correspondence relationship between fiber lengths of a backbone fiber and optical powers, a curve representing a correspondence relationship between fiber lengths of a first-stage fiber and optical powers, a curve representing a correspondence relationship between fiber lengths of a second-stage fiber and optical powers, etc.), and each curve can represent a linear attenuation interval of Rayleigh backscatter optical power as a function of transmission length in the optical path pathloss information. When a linear attenuation interval of Rayleigh backscatter optical power as a function of transmission length in the optical path pathloss information corresponding to a certain optical path segment is given, a fiber length corresponding to the linear attenuation interval of Rayleigh backscatter optical power as a function of transmission length in the optical path pathloss information can be computed based on the curve.

Different optical devices correspond to different insertion losses. For example, the wavelength division multiplexer corresponds to a wavelength division multiplexer insertion loss, the first-stage preset splitter corresponds to a first-stage preset splitter insertion loss, and the second-stage preset splitter corresponds to a second-stage preset splitter insertion loss. Based on different insertion loss values, positions of different optical devices can be quickly located, and the locating accuracy can be improved.

As shown in FIG. 11, wavelengths of optical detection signals corresponding to the first-stage preset splitter may be divided into 8 segments, i.e., λ_{1band}, λ_{2band}, ..., λ_{8band}; and there may be 8 second-stage preset splitters, i.e., a second-stage preset splitter #1, ..., a second-stage preset splitter #8.

A wavelength of the optical detection signal corresponding to the second-stage preset splitter #1 is obtained by dividing λ_{1band} into equal parts periodically, so that wavelengths of 8 optical detection signals with the same bandwidth are obtained, where the wavelength bandwidths are λ₁₁, λ₁₂, ..., λ₁₈ .Likewise, a wavelength of the optical detection signal corresponding to the second-stage preset splitter # 8 is obtained by dividing λ_{8band} into equal parts periodically, so that wavelengths of 8 optical detection signals with the same bandwidth are obtained, where the wavelength bandwidths are λ₈₁, λ₈₂, ..., λ₈₈.

In addition, different wavelengths of optical detection signals correspond to different port numbers of preset splitters. For example, if the wavelength number of the optical detection signal is λ₁₁, it represents that the port numbers of the preset splitters corresponding to the wavelength of the optical detection signal are port 1 of the first-stage preset splitter and port 1 of the second-stage preset splitter #1. If the wavelength number of the optical detection signal is λ₈₅, it represents that the port numbers of the preset splitters corresponding to the wavelength of the optical detection signal are port 8 of the first-stage preset splitter and port 5 of the second-stage preset splitter #8.

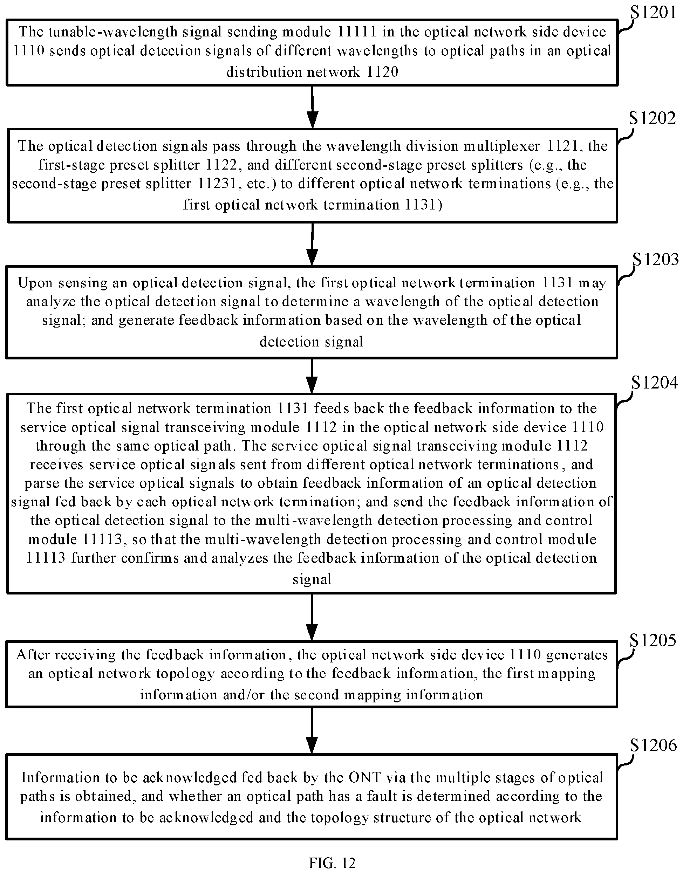

FIG. 12 shows a schematic flowchart of a working method of an optical network topology generation system according to an embodiment of the present application. As shown in FIG. 12, the working method of the optical network topology generation system includes, but is not limited to, the following operations S1201 to S1206.

In operation S1201, the tunable-wavelength signal sending module 11111 in the optical network side device 1110 sends optical detection signals of different wavelengths to optical paths in an optical distribution network 1120.

The optical detection signals may include any one or more of single pulse signals, various coded pulse signals, or continuous signals. The optical detection signals may be sent in a slot, or may be sent in a specified slot; the corresponding sending time may be set according to actual needs to facilitate detection of the optical path.

Before operation S1201, fiber length matching information is desired to be obtained. The fiber length matching information is matching information that can reflect a correspondence relationship between various pieces of fiber length information in an optical network and linear attenuation intervals of Rayleigh backscatter optical power as a function of transmission length in optical path pathloss information of multiple stages of optical path segments connected to a plurality of ONTs.

The tunable-wavelength signal sending module 11111 may send wavelength numbers of the optical detection signals to all ONTs in the optical network through downlink service optical signals, so that upon sensing an optical detection signal, each ONT can, know the wavelength number of the optical detection signal. It should be noted that while an optical detection signals passing through an optical path, the tunable-wavelength signal receiving module 11112 can obtain pathloss information of the optical path based on Rayleigh backscattering properties of the optical detection signal. The pathloss information of the optical path can reflect a correspondence relationship between fiber lengths and optical powers. For example, the fiber length matching information represents the correspondence relationship between fiber lengths and optical powers by the curves shown in FIG. 11, that is, the fiber length is inversely proportional to the optical power.

When the pathloss information of an optical path is given, length information of each stage of optical fiber in the optical path can be determined according to the pathloss information of the optical path and the fiber length matching information; position information of the optical network side device is obtained; and position information of each stage of preset splitter in the corresponding optical path is determined according to the fiber length information and the position information of the optical network side device.

For example, the fiber length information may include a fiber length of a backbone optical path, a fiber length of a first-stage optical path, a fiber length of a second-stage optical path or the like, so that position information of various stages of preset splitters is accurately located.

In the process of passing through each preset splitter, the optical detection signal has a significantly smaller attenuation when passing through the wavelength division multiplexer than the case of passing through a traditional splitter, so that the optical detection signal can penetrate through the preset splitter, which can greatly improve the accuracy of the obtained pathloss information of the optical path, and reduce the influence of possible environmental noise generated in the multiple stages of splitters on transmission of the optical signal.

In operation S1202, the optical detection signals pass through the wavelength division multiplexer 1121, the first-stage preset splitter 1122, and different second-stage preset splitters (e.g., the second-stage preset splitter 11231, etc.) to different optical network terminations (e.g., the first optical network termination 1131).

The first-stage preset splitter 1122 and the different second-stage preset splitters can both reduce attenuation of the optical detection signals penetrating through the splitters; and wavelength numbers corresponding to the optical detection signals passing through different optical paths correspond to port numbers of the different preset splitters, so that different optical paths can be conveniently located.

In operation S1203, upon sensing an optical detection signal, the first optical network termination 1131 may analyze the optical detection signal to determine a wavelength of the optical detection signal; and generate feedback information based on the wavelength of the optical detection signal.

The feedback information may include at least one of recovery information of a pulse signal in the optical detection signal by the ONT, a port number of a preset splitter in the optical path corresponding to the ONT, or wavelength or spectrum information of the optical detection signal.

For example, the ONT may determine the feedback information by recovering a pulse signal in the received optical detection signal, or computing a power difference of a Raman amplified operation signal caused by continuously receiving the optical detection signal, or by detecting wavelength and spectrum information of the optical detection signal, or the like.

It should be noted that if it is determined that the first optical network termination 1131 receives an optical detection signal, the first optical network termination 1131 will confirm that the optical detection signal is exclusively used by itself based on a wavelength number of the optical detection signal, and transmit the generated feedback information to the optical network side device 1110 so that the optical network side device 1110 records the detection information.

The tunable-wavelength signal receiving module 11112 receives a backscatter signal generated by the optical detection signal based on the Rayleigh backscatter property when passing through the optical path, and transmits the backscatter signal to the multi-wavelength detection processing and control module 11113, so that the multi-wavelength detection processing and control module 11113 analyzes the backscatter signal to determine pathloss information of the optical path.

In operation S1204, the first optical network termination 1131 feeds back the feedback information to the service optical signal transceiving module 1112 in the optical network side device 1110 through the same optical path. The service optical signal transceiving module 1112 receives service optical signals sent from different optical network terminations, and parse the service optical signals to obtain feedback information of an optical detection signal fed back by each optical network termination; and send the feedback information of the optical detection signal to the multi-wavelength detection processing and control module 11113, so that the multi-wavelength detection processing and control module 11113 further confirms and analyzes the feedback information of the optical detection signal.

The feedback information is transmitted through the second-stage preset splitter 11231 to the first-stage preset splitter 1122, then through the first-stage preset splitter 1122 to the wavelength division multiplexer 1121, and finally transmitted to the service optical signal transceiving module 1112 from the wavelength division multiplexer 1121. For example, the first optical network termination 1131 may carry the feedback information in an uplink service optical signal, where the uplink service optical signal has a working wavelength different from the optical detection signal, so that the optical network side device can distinguish the service optical signal from the optical detection signal conveniently.

In operation S1205, after receiving the feedback information, the optical network side device 1110 generates an optical network topology according to the feedback information, the first mapping information and/or the second mapping information.

The feedback information includes: optical path pathloss information of the optical detection signal, while the first mapping information and/or the second mapping information may include: a port number of a preset splitter, a wavelength of the optical detection signal and a corresponding wavelength number thereof; or, the first mapping information and/or the second mapping information includes: a port number of a preset splitter, and a wavelength number of a preset optical detection signal.

For example, position information of each stage of preset splitter in the corresponding optical path may be determined according to the optical path pathloss information and the fiber length matching information; according to the position information of each stage of preset splitter in the optical path corresponding to the ONT, the first mapping information and/or the second mapping information are searched to determine the port number of each stage of preset splitter in the optical path corresponding to the ONT; and an optical network topology is generated according to the port number of each stage of preset splitter in the optical path corresponding to the ONT.

The optical network topology may include: an ONT-connected optical path, and/or an ONT-disconnected optical path.

By enabling the communicative connection of various devices in the optical network by different types of optical paths, the optical network side device can provide communication services for more optical network terminations, and thus improve the communication efficiency. In addition, under the condition that the connection relationships of the different types of optical paths are definite, the accurate optical network topology can be obtained, through which the fiber connection conditions among the devices can be quickly identified, so that the management of different types of devices is facilitated, potential faults in each device can be quickly found, and the communication security of the optical network is improved.

In operation S1206, information to be acknowledged fed back by the ONT via the multiple stages of optical paths is obtained, and whether an optical path has a fault is determined according to the information to be acknowledged and the topology structure of the optical network.

The information to be acknowledged is information that represents a connection relationship of ports in multiple stages of ONT-connected optical paths. The multiple stages of optical paths include: a backbone optical path, and/or a plurality of different stages of optical paths; where the backbone optical path and the plurality of different stages of optical paths each include a preset splitter.

In this embodiment, by sending optical detection signals of different wavelengths from the optical network side device to optical paths in the optical distribution network, optical paths can be detected based on the optical detection signals of different wavelengths to determine which wavelength of optical detection signal is suitable for each optical path, so that different optical paths can be detected and comprehensive detection of the optical paths can be improved; by obtaining feedback information returned via the optical paths, a detection result of each optical path can be determined, and the optical fiber connection condition in the optical path can be well determined through the feedback information, thereby facilitating subsequent processing; and by generating an optical network topology according to the feedback information, the first mapping information and/or the second mapping information, where the first mapping information and/or the second mapping information are information reflecting a mapping relationship between wavelengths of preset optical detection signals and port numbers of preset splitters, the optical network topology does not need to be obtained in a manual recording mode any more, which can not only reduce the labor cost, but also update the connection relationship of the devices in the optical network dynamically in real time, and improve the accuracy of the connection relationship of the devices in the optical network topology.

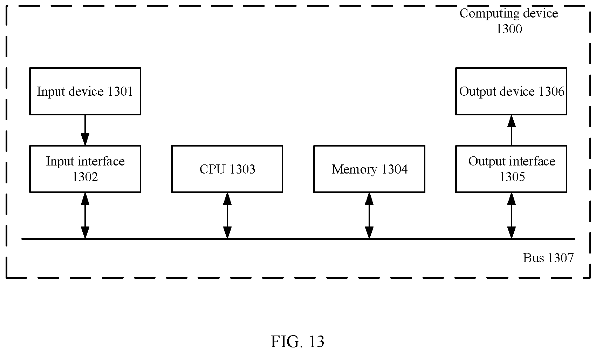

FIG. 13 shows a block diagram of an exemplary hardware architecture of a computing device capable of implementing the optical network topology generation method and apparatus according to an embodiment of the present disclosure.

As shown in FIG. 13, the computing device 1300 includes an input device 1301, an input interface 1302, a central processing unit 1303, a memory 1304, an output interface 1305, and an output device 1306. The input interface 1302, the central processing unit 1303, the memory 1304, and the output interface 1305 are connected to each other via a bus 1307, and the input device 1301 and the output device 1306 are connected to the bus 1307 via the input interface 1302 and the output interface 1305, respectively, and further connected to other components of the computing device 1300.

The input device 1301 receives input information from the outside, and transmits the input information to the central processing unit 1303 through the input interface 1302; the central processing unit 1303 processes the input information based on computer-executable instructions stored in the memory 1304 to generate output information, stores the output information temporarily or permanently on the memory 1304, and then transmits the output information to the output device 1306 through the output interface 1305; and the output device 1306 outputs the output information outside of the computing device 1300 for use by a user.

In one embodiment, the computing device shown in FIG. 13 may be implemented as an electronic device including: a memory configured to store a program; and a processor configured to execute the program stored on the memory to implement the optical network topology generation method according to any of the above embodiments.

In one embodiment, the computing device shown in FIG. 13 may be implemented as an optical network topology generation system, which may include: a memory configured to store a program; and a processor configured to execute the program stored on the memory to implement the optical network topology generation method according to any of the above embodiments.

The above are merely exemplary embodiments of the present application and not intended to limit the scope of the present application. In general, the various embodiments of the present application may be implemented in hardware or special purpose circuits, software, logic or any combination thereof. For example, some aspects may be implemented in hardware, while other aspects may be implemented in firmware or software which may be executed by a controller, a microprocessor or any other computing device, although the present application is not limited thereto.

Embodiments of the present application may be implemented by a data processor of a mobile device executing computer program instructions, for example, in a processor entity, or by hardware, or by a combination of software and hardware. The computer program instructions may be assembler instructions, instruction set architecture (ISA) instructions, machine instructions, machine-related instructions, microcodes, firmware instructions, state setting data, or source or object codes written in any combination of one or more programming languages.

The block diagrams of any logic flow in the figures of the present application may represent program operations, or may represent interconnected logic circuits, modules, and functions, or may represent a combination of program operations and logic circuits, modules, and functions. The computer program may be stored on a memory. The memory may be of any type suitable to the local technical environment and may be implemented in any suitable data storage technology, such as but not limited to, read only memories (ROMs), random access memories (RAMs), optical storage devices or systems (digital versatile discs (DVDs), compact discs (CDs)), etc. The computer-readable medium may include a non-transitory storage medium. The data processor may be of any type suitable to the local technical environment, such as but not limited to, general purpose computers, dedicated computers, microprocessors, digital signal processors (DSPs), application specific integrated circuits (ASICs), field programmable gate arrays (FGPAs), and processors based on multi-core processor architecture.

The foregoing has provided by way of exemplary and non-limiting examples a detailed description of exemplary embodiments of the present application. Various modifications and adaptations to the foregoing embodiments may become apparent to those skilled in the art in view of the accompanying drawings and the appended claims, without departing from the scope of the present disclosure. Accordingly, the proper scope of the present disclosure is to be determined according to the claims.

## Claims

1. An optical network topology generation method applied to an optical network side device, comprising:
sending optical detection signals of different wavelengths to an optical path in an optical distribution network, ODN, wherein the ODN is communicatively connected to at least one optical network termination, ONT;
obtaining feedback information returned via the optical path, wherein the feedback information is information for determining a connection relationship of preset splitters in the ODN; and
generating an optical network topology according to the feedback information.

2. The method according to claim 1, wherein before sending optical detection signals of different wavelengths to the optical path in the ODN, the method further comprises:
generating first mapping information and second mapping information;
wherein the first mapping information comprises a correspondence relationship between port numbers of the preset splitters and wavelength numbers of preset optical detection signals, and the second mapping information comprises a correspondence relationship between wavelengths and wavelength numbers of the preset optical detection signals.

3. The method according to claim 2, wherein before sending optical detection signals of different wavelengths to the optical path in the ODN, the method further comprises:
sending the first mapping information to the ONT so that the ONT matches a wavelength number or wavelength of an optical detection signal received by the ONT according to the second mapping information, to obtain a matching result; and
sending the second mapping information to the ONT so that the ONT determines a port number of a preset splitter connected to the ONT according to the first mapping information and the matching result,
wherein the feedback information is information determined by the ONT by analyzing a forward transmission signal of the received optical detection signal passing through the optical path, and the feedback information comprises: the port number of the preset splitter in the optical path fed back by the ONT, and
wherein generating the optical network topology according to the feedback information comprises:
determining optical path topology information according to the port number of the preset splitter in the optical path fed back by the ONT, wherein the optical path topology information represents a logical connection relationship between ports of respective devices in the optical path; and
determining the optical network topology according to the optical path topology information.

4. The method according to claim 2, wherein before sending optical detection signals of different wavelengths to the optical path in the ODN, the method further comprises:
sending the second mapping information to the ONT so that the ONT matches a wavelength of an optical detection signal received by the ONT according to the second mapping information, to determine a wavelength number of the optical detection signal; wherein
the feedback information is information determined by the ONT by analyzing a forward transmission signal of the received optical detection signal passing through the optical path, and the feedback information comprises: the wavelength number of the optical detection signal fed back by the ONT, and,
wherein generating the optical network topology according to the feedback information comprises:
generating optical path topology information according to the first mapping information and the wavelength number of the optical detection signal fed back by the ONT, wherein the optical path topology information represents a logical connection relationship between ports of respective devices in the optical path; and
determining the optical network topology according to the optical path topology information.

5. The method according to claim 2, wherein the feedback information is information determined by the ONT by analyzing a forward transmission signal of the received optical detection signal passing through the optical path, and the feedback information comprises: feedback from the ONT about whether an optical detection signal is received, or a wavelength of a received optical detection signal, or a wavelength number of a received optical detection signal, and
wherein generating the optical network topology according to the feedback information comprises:
matching, according to the first mapping information and the second mapping information, the wavelength number corresponding to the received optical detection signal or the wavelength of the received optical detection signal fed back by the ONT, to determine a port number of a preset splitter connected to the ONT;
determining optical path topology information according to the port number of the preset splitter in the optical path, wherein the optical path topology information represents a logical connection relationship between ports of respective devices in the optical path; and
determining the optical network topology according to the optical path topology information.

6. The method according to claim 2, wherein the feedback information is feedback information generated by the optical network side device by analyzing a backscatter signal of the received optical detection signal passing through the optical path; the feedback information further comprises pathloss information of the optical path, and
wherein generating the optical network topology according to the feedback information further comprises:
determining fiber length matching information according to the pathloss information of the optical path and length information of each optical fiber in the optical network;
determining, according to the fiber length matching information, position information of each stage of preset splitter in the optical path;
searching the first mapping information according to the wavelength number of the optical detection signal to determine a port number of each stage of preset splitter in the optical path;
generating optical path topology information according to the position information of each stage of preset splitter in the optical path and the port number of each stage of preset splitter in the optical path; and
determining the optical network topology according to the optical path topology information.

7. The method according to claim 6, wherein the fiber length matching information comprises: information of a backscatter optical power linearly decreasing as a fiber transmission length increases, and an optical power insertion loss of a preset optical device;
wherein the optical power insertion loss of the preset optical device is a local optical power loss value caused by inserting an optical device into a preset position of an optical fiber.

8. The method according to claim 6 or 7, wherein determining, according to the fiber length matching information, position information of each stage of preset splitter in the optical path comprises:
obtaining position information of the optical network side device; and
determining position information of each stage of preset splitter in the optical path according to length information of each stage of optical fiber in the optical path and the position information of the optical network side device.

9. The method according to claim 1, wherein after generating the optical network topology according to the feedback information, the method further comprises:
obtaining information to be acknowledged fed back by the optical path, wherein the information to be acknowledged represents the optical path topology information; and
determining whether the optical path is abnormal according to the information to be acknowledged and the optical network topology.

10. The method according to claim 9, wherein determining whether the optical path is abnormal according to the information to be acknowledged and the optical network topology comprises:
matching the optical path topology information with the optical network topology, to determine whether the optical path topology information is changed; and
determining, under the condition of determining that the optical path topology information is changed, that the optical path is abnormal.

11. The method according to claim 2, wherein generating the first mapping information comprises:
planning port numbers of the plurality of preset splitters, to obtain port numbers of the plurality of preset splitters;
determining, according to start ports and end ports of a plurality of optical paths and the port numbers of the plurality of preset splitters, port numbers of preset splitters in the plurality of optical paths;
determining, according to the port numbers of preset splitters in the plurality of optical paths, wavelength numbers of optical detection signals passing through the optical paths; and
generating the first mapping information according to the wavelength numbers of a plurality of optical detection signals and the port numbers of the corresponding preset splitters.

12. An optical network side device, comprising:
a sending module configured to send optical detection signals of different wavelengths to an optical path in an optical distribution network, ODN, wherein the ODN is communicatively connected to at least one optical network termination, ONT;
an obtaining module configured to obtain feedback information returned via the optical path, wherein the feedback information is information for determining a connection relationship of preset splitters in the ODN; and
a generation module configured to generate an optical network topology according to the feedback information.

13. An optical network topology generation system, comprising: an optical network side device and at least one optical network termination, ONT connected through an optical distribution network, ODN, wherein an optical path in the ODN comprises a preset splitter;
the optical network side device is configured to perform the optical network topology generation method according to any one of claims 1 to 11;
the ONT is configured to receive optical detection signals of different wavelengths sent from the optical network side device through the optical path in the ODN; analyze the optical detection signals to generate feedback information; and send the feedback information to the optical network side device through the ODN so that the optical network side device generates an optical network topology according to the feedback information; and
the preset splitter is configured to split and transmit a service optical signal and an optical detection signal between the optical network side device and the ONT.

14. The system according to claim 13, wherein the optical network side device comprises: an optical line terminal, OLT and an optical time domain reflectometer, OTDR;
wherein the OLT comprises a module for sending and receiving service optical signals, and the OTDR is configured to send optical detection signals of different wavelengths and receive backscatter signals of the optical detection signals, wherein the optical detection signals of different wavelengths are signals implemented by a device comprising any one of a switch-controlled array laser, a tunable laser, a broadband laser source plus comb filter, a wavelength division multiplexer, or an array laser.

15. The system according to claim 13, wherein the ODN comprises: an optical path determined by N stages of cascaded preset splitters, and/or an optical path determined by the preset splitter and the ONT;
wherein a wave band of an optical detection signal output from an (N-1)^{th}-stage preset splitter is used for wavelength demultiplexing of a plurality of N^{th}-stage preset splitters, and ports of each preset splitter correspond to a different wavelength property of optical detection signals, where N is an integer greater than 1.

16. The system according to claim 13, wherein the preset splitter comprises: a splitter and a wavelength division multiplexer;
the splitter is configured to transmit the service optical signal; and
the wavelength division multiplexer is configured to transmit a backscatter signal and a forward transmission signal of the optical detection signal;
wherein the service optical signal has a wavelength different from the optical detection signal.

17. The system according to claim 16, wherein the preset splitter further comprises: a combiner/splitter respectively connected to one splitter and one wavelength division multiplexer; and
the combiner/splitter is configured to multiplex and/or demultiplex wavelengths of the service optical signal and the optical detection signal.

18. An electronic device, comprising:
one or more processors; and
a memory having one or more programs stored thereon which, when executed by the one or more processors, cause the one or more processors to implement the optical network topology generation method according to any one of claims 1 to 11.

19. A computer readable storage medium having a computer program stored thereon which, when executed by a processor, causes the optical network topology generation method according to any one of claims 1 to 11 to be implemented.
